# EUROPEAN PATENT APPLICATION

(11) **EP 4 783 327 A1**
(43) Date of publication of application: **29.07.2026**
(21) Application number: 25837623.5
(22) Date of filing: 07.07.2025
(51) Int. Cl.: H01M 50/264, H01M 10/04, H01M 50/105, H01M 50/211

(54) **BATTERY MODULE AND BATTERY PACK**

(30) Priority: 09.07.2024 KR 20240090586
(71) Applicant: LG ENERGY SOLUTION, LTD., Seoul 07335 (KR)
(72) Inventor: The designation of the inventor has not yet been filed
(74) Representative: Plasseraud IP
(86) International application number: PCT/KR2025/009760
(87) International publication number: WO 2026/014846

(57) **Abstract**

The present disclosure relates to a battery module and a battery pack, and more specifically, to a battery module in which a plurality of battery cells capable of being charged and discharged are accommodated in a housing, and a battery pack including a plurality of such battery modules. A battery module according to an embodiment of the present disclosure may include a battery cell group composed of a plurality of battery cells; a housing accommodating the battery cell group; and a sheet-like member attached to the battery cell group, wherein the housing may have a protrusion that forms a receiving space for accommodating a resin, and the battery cell group may be supported by the protrusion. Here, the sheet-like member attached to the battery cell group may contact the upper surface of the protrusion.

## Description

### TECHNICAL FIELD

### CROSS-REFERENCE TO RELATED APPLICATIONS

The present application is based on and claims priority from Korean Patent Application No. 10-2024-0090586, filed on July 9, 2024, with the Korean Intellectual Property Office, the disclosure of which is incorporated herein in its entirety by reference.

### TECHNICAL FIELD

The present disclosure relates to a battery module and a battery pack, and more specifically, to a battery module in which a plurality of battery cells capable of being charged and discharged are accommodated in a housing, and a battery pack including a plurality of such battery modules.

### BACKGROUND ART

A secondary battery (rechargeable battery) is a battery that can be charged and discharged, unlike a primary battery that cannot be recharged. A low-capacity secondary battery is used in small portable electronic devices such as mobile phones, laptop computers and camcorders, while a high-capacity battery is widely used as a power source for driving motors in hybrid vehicles or the like.

The secondary battery may be used in the form of a battery cell, and the battery cell may have a form in which a plurality of electrodes are alternately laminated within an exterior material with a separator therebetween, and the internal space of the exterior material is filled with an electrolyte. A plurality of battery cells may be electrically connected to form a battery module.

The battery module has a shape in which a plurality of battery cells are accommodated within a housing, and a liquid-type resin that adheres the plurality of battery cells to the housing and releases heat generated during charging and discharging of the battery cells to the outside is accommodated within this housing. In general, the resin is provided in a resin receiving space formed on the lower surface of the housing, and a plurality of battery cells are positioned above the resin.

At this time, since some of the plurality of battery cells are inserted into the resin receiving space to press the liquid-type resin, there is a problem of the resin overflow from the receiving space. In particular, when the resin solidifies outside the designed receiving space, there is a problem that the battery cell is locally pressed to damage the exterior material of the battery cell and shorten the life of the battery cell.

### DISCLOSURE

### TECHNICAL PROBLEM

The present disclosure is designed to solve the problems of the related art, and therefore the present disclosure is directed to providing a battery module capable of preventing a resin from overflowing from a resin receiving space within a housing.

### TECHNICAL SOLUTION

A battery module according to an embodiment of the present disclosure may include a battery cell group composed of a plurality of battery cells; a housing accommodating the battery cell group; and a sheet-like member attached to the battery cell group, wherein the housing may be provided with a protrusion that forms a receiving space for accommodating a resin and supports the battery cell group, and wherein the sheet-like member attached to the battery cell group may contact an upper surface of the protrusion.

A portion of the sheet-like member may contact the upper surface of the protrusion, and the remaining portion of the sheet-like member may contact the resin within the receiving space.

A portion of the sheet-like member may be attached to the upper surface of the protrusion.

A plurality of holes may be formed in the sheet-like member.

The same number of holes as the number of battery cells may be formed in the sheet-like member.

Each portion of the sheet-like member that contacts the plurality of battery cells may have one hole for each.

The plurality of holes may be disposed at equal intervals in the sheet-like member.

The sheet-like member may be made of any one of silicon, PP, PET, PVC, and PE.

The sheet-like member may be made of a mesh material.

The sheet-like member may have a strip shape that is attached to both side surfaces and a lower surface of the battery cell group.

The plurality of battery cells may be arranged in a row along the width direction of the housing, and the sheet-like member may be attached to the battery cell group in a direction parallel to the direction in which the plurality of battery cells are arranged.

The protrusions may include a first protrusion provided on one surface of the housing in the length direction; and a second protrusion provided on the other surface of the housing in the length direction.

The first protrusion and the second protrusion may each have a bar shape extending along the width direction of the housing.

The sheet-like member may include a first sheet-like member in which at least a portion thereof contacts the upper surface of the first protrusion; and a second sheet-like member in which at least a portion thereof contacts the upper surface of the second protrusion.

The distance between the first sheet-like member and the second sheet-like member may be shorter than the distance between the first protrusion and the second protrusion.

Each of the plurality of battery cells may be a pouch cell.

The length of the sheet-like member in the width direction may be longer than the length of the protrusion in the width direction.

Meanwhile, a battery pack according to an embodiment of the present disclosure may include a battery module assembly in which the plurality of battery modules are connected; and a case that accommodates the battery module assembly.

### ADVANTAGEOUS EFFECTS

A battery module according to an embodiment of the present disclosure may include a battery cell group composed of a plurality of battery cells; a housing accommodating the battery cell group; and a sheet-like member attached to the battery cell group, wherein the housing may have a protrusion that forms a receiving space for accommodating a resin, and the battery cell group may be supported by the protrusion. Here, the sheet-like member attached to the battery cell group may contact the upper surface of the protrusion. In this case, the plurality of battery cells do not press the resin within the receiving space, and thus the resin may be prevented from overflowing from the receiving space.

### DESCRIPTION OF DRAWINGS

FIG. 1 is a view schematically showing a state in which a battery module according to Embodiment 1 of the present disclosure is assembled.
FIG. 2 is a view showing a state in which a battery cell group is supported by a protrusion in a battery module according to Embodiment 1 of the present disclosure.
FIG. 3 is a view for describing a state in which a sheet-like member is attached to a battery cell group in a battery module according to Embodiment 1 of the present disclosure.
FIG. 4 is a view for describing a position in which a sheet-like member is seated in a battery module according to Embodiment 1 of the present disclosure.
FIG. 5 is a view showing a state in which a sheet-like member is torn when a battery cell expands in a battery module according to Embodiment 1 of the present disclosure.
FIG. 6 is a view showing that holes are formed in a sheet-like member attached to a battery cell group in a battery module according to Embodiment 2 of the present disclosure.
FIG. 7 is a view showing a state in which a resin flows into holes formed in a sheet in a battery module according to Embodiment 2 of the present disclosure.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a battery module according to the present disclosure will be described with reference to the drawings.

### Embodiment 1

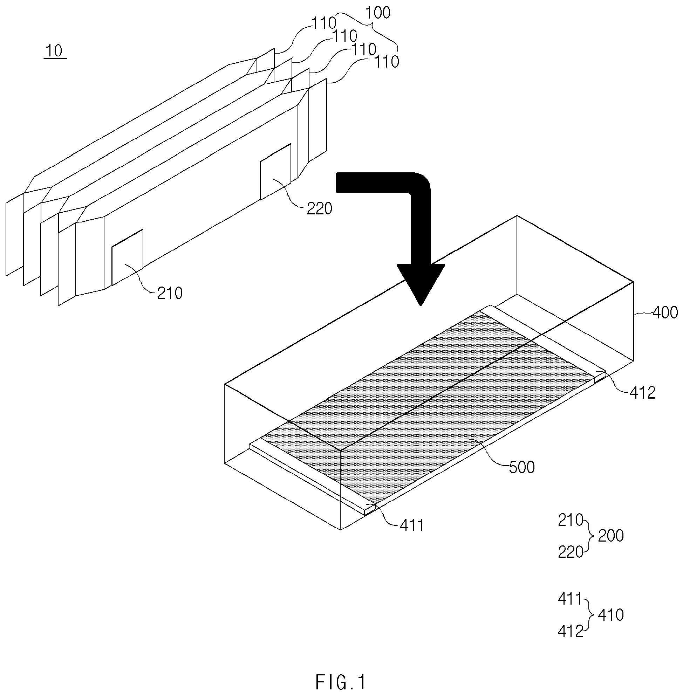

FIG. 1 is a view schematically showing a state in which a battery module according to Embodiment 1 of the present disclosure is assembled.

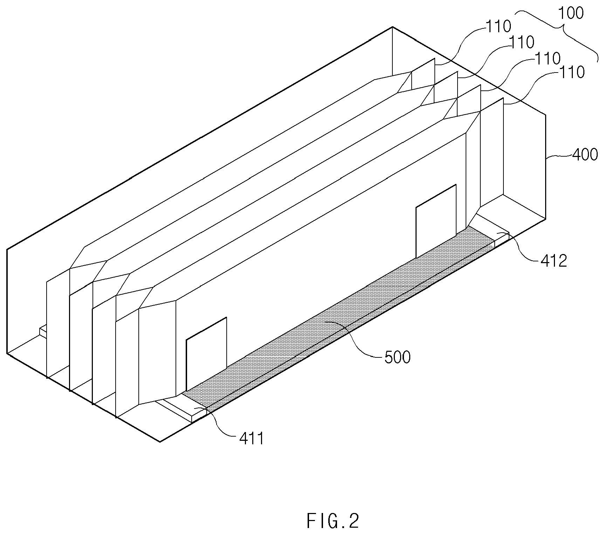

FIG. 2 is a view showing a state in which a battery cell group is supported by a protrusion in a battery module according to Embodiment 1 of the present disclosure. Specifically, FIG. 2 illustrates a state in which one end of a plurality of battery cells included in a battery cell group is supported upward by a protrusion formed in a housing.

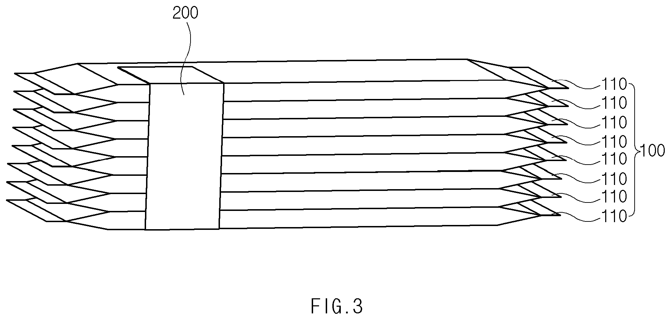

FIG. 3 is a view for describing a state in which a sheet-like member is attached to a battery cell group in a battery module according to Embodiment 1 of the present disclosure. Specifically, FIG. 3 is a view showing in detail a lower area of a battery cell group to which a sheet-like member is attached.

Referring to FIGS. 1 to 3, a battery module 10 according to Embodiment 1 of the present disclosure may include a battery cell group 100 composed of a plurality of battery cells 110, a housing 400 accommodating the battery cell group 100, and a sheet-like member 200 attached to the battery cell group 100. This housing 400 is provided with a protrusion 410 that forms a receiving space S for accommodating a resin 500, and the battery cell group 100 may be supported by the protrusion 410. At this time, the sheet-like member 200 attached to the battery cell group 100 may contact the upper surface of the protrusion 410.

When the battery module 10 has the structure as described above, the plurality of battery cells 110 are supported by the protrusion 410 toward the upper side of the receiving space S, thereby preventing some of the plurality of battery cells 110 from being introduced into the receiving space S. Therefore, the pressure exerted by the plurality of battery cells 110 on the resin 500 within the receiving space S is minimized, and thus the resin 500 overflow from the receiving space S may be prevented.

The battery cell group 100 is an assembly of battery cells 110 composed of a plurality of battery cells 110, which may include various numbers of battery cells 110. Each of the plurality of battery cells 110 included in the battery cell group 100 is a secondary battery capable of being charged and discharged, and the battery cells may be accommodated within the housing 400 in an electrically connected state.

Here, the plurality of battery cells 110 may be disposed in various ways within the housing 400. For example, as illustrated in FIG. 1, the plurality of battery cells 110 may be arranged in a row along the width direction of the housing 400 within the housing 400. In this case, the electrode tabs of each of the plurality of battery cells 110 may protrude toward both inner surfaces of the housing 400 in the length direction.

The sheet-like member 200 is bonded to the battery cell group 100 to bind the battery cells 110 within the battery cell group 100, and may be bonded to the battery cell group 100 in various ways. For example, the sheet-like member 200 may be bonded to the battery cell group 100 using an adhesive. In this case, an adhesive surface 300 to be described later may be formed between the sheet-like member 200 and the battery cell group 100.

Additionally, the sheet-like member 200 may be attached to the battery cell group 100 in a direction parallel to the direction in which the plurality of battery cells 110 are arranged. When the plurality of battery cells 110 are arranged in a row along the width direction of the housing 400 within the housing 400, the sheet-like member 200 may be attached to the battery cell group 100 in a direction parallel to the width direction of the housing 400.

The housing 400 is a case that accommodates the battery cell group 100 to which the sheet-like member 200 is attached, and may be made of various materials. The housing 400 may be made of a metal material with an insulating coating layer or a resin material. Additionally, the housing 400 may have various shapes. For example, the housing 400 may have a cuboid box shape having an empty space therein for accommodating the battery cell group 100. Additionally, a protrusion 410 may be formed on the lower surface of the housing 400.

The protrusion 410 is a member that protrudes from the lower surface of the housing 400 to the internal space of the housing 400, and may form a receiving space S inside the housing 400. Specifically, the protrusions 410 are each formed on both sides of the housing 400 in the length direction, and may have a bar shape extending from one surface of the housing 400 to the other surface in the width direction.

In this case, the protrusions 410 are composed of a first protrusion 411 provided on one surface of the housing in the length direction and a second protrusion 412 provided on the other surface of the housing in the length direction, and the first protrusion 411 and the second protrusion 412 may each have a bar shape extending along the width direction of the housing. The pair of protrusions 411, 412 may form a receiving space S for accommodating a resin 500 together with the inner surface of the housing in the width direction.

Meanwhile, the protrusion 410 may be made of the same material as the housing 400. That is, the protrusion 410, like the housing 400, may be made of a metal material with an insulating coating layer or a resin material.

The resin 500 fixes the plurality of battery cells 110 to the housing 400 and releases heat generated during charging and discharging of the battery cells 110 to the outside, and the resin 500 may be injected in a liquid state into the receiving space S. The resin 500 may harden while in contact with one surface of the plurality of battery cells 110, thereby fixing the positions of the plurality of battery cells 110 within the housing 400.

In the case of a conventional battery module, the battery cells were fixed within the housing by injecting the resin into the bottom surface of the housing and then arranging the battery cells above the resin. In this method, there was a problem in that some of the resin hardened while flowing between the battery cells to press the battery cells, thereby damaging the exterior materials of the battery cells and shortening the life of the battery cell.

In the case of the battery module 10 according to Embodiment 1 of the present disclosure, the plurality of battery cells 110 within the housing 400 are supported by the protrusion 410 toward the upper side of the receiving space S while the sheet-like member 200 is attached, thereby minimizing the battery cells 110 from being immersed in the resin 500 within the receiving space S. Specifically, the resin 500 within the receiving space S is in contact with one surface of the battery cells 110, but the battery cells 110 are supported upward by the protrusion 410, thereby preventing some of the battery cells 110 from being introduced into the receiving space S.

That is, the pressure exerted by the plurality of battery cells 110 on the resin 500 within the receiving space S is minimized, and thus, in the case of the battery module 10 according to Embodiment 1 of the present disclosure, the resin 500 overflow from the receiving space S may be prevented.

Meanwhile, the battery cells 110 belonging to the battery cell group 100 may be configured in various types. For example, the battery cell 110 may be a prismatic or cylindrical cell. In particular, the battery cell 110 may be a pouch cell in which the electrode assembly is accommodated within a pouch.

Here, the pouch includes a laminate sheet including a metal layer such as aluminum or stainless steel, and a resin layer may be formed on the outer surface and/or inner surface of this metal layer.

The metal layer may serve as a substrate that maintains mechanical strength and a barrier layer that prevents the penetration of moisture and oxygen. The metal layer may be made of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The first resin layer coated on the outer surface of the metal layer should have excellent resistance to the external environment in order to protect the electrode assembly from the outside, and thus the first resin layer is required to have excellent tensile strength and durability relative to its thickness. Materials for the first resin layer may include a polyester-based resin such as polyethylene terephthalate (PET) and polyethylene naphthalate (PEN), a polyolefin-based resin such as polyethylene and polypropylene, and the like.

The second resin layer coated on the inner surface of the metal layer may be thermally fused to each other to seal the internal space of the pouch, and the second resin layer may be made of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

When the battery cell 110 is a pouch cell in which the electrode assembly is accommodated inside the pouch as described above, unlike a prismatic or cylindrical battery, the shape of the pouch is not standardized, and thus the shape of the battery cell 110 may change depending on the shape of the space for accommodating. At this time, when the first and second protrusions 411, 412 formed on the lower surface of the housing 400 support both ends of the electrode assembly inside the battery cell 110 upward, a change in the shape of the pouch-type battery cell 110 may be minimized.

Therefore, it is possible to minimize some of the pouch-type battery cell 110 from being introduced into the receiving space S. That is, the pressure exerted by the plurality of battery cells 110 on the resin 500 within the receiving space S is minimized, and thus the resin 500 overflow from the receiving space S may be prevented.

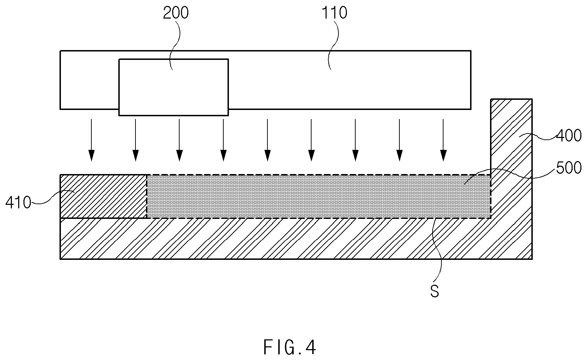

Meanwhile, FIG. 4 is a view for describing a position in which a sheet-like member is seated in a battery module according to Embodiment 1 of the present disclosure. Specifically, FIG. 4 illustrates a state in which a sheet-like member attached to the battery cell group is seated at the boundary between the resin and the protrusion.

Referring to FIG. 4, a portion of the sheet-like member 200 contacts the upper surface of the protrusion 410, and the remaining portion of the sheet-like member 200 may contact the resin 500 within the receiving space S. When the battery cell group 100 is seated within the housing 400, the sheet-like member 200 may be positioned at the boundary between the resin 500 and the protrusion 410. In this case, a portion of the lower surface of the sheet-like member 200 may contact the protrusion 410, and the remaining portion of the lower surface of the sheet-like member 200 may contact the resin 500 accommodated in the receiving space S.

That is, a portion of the sheet-like member 200 that contacts the resin 500 may be fixed to the resin 500 as the resin 500 hardens. Therefore, the portion of the sheet-like member 200 that contacts the resin 500 may fix the position of the battery cell group 100 inside the housing 400.

Additionally, a portion of the sheet-like member 200 that does not contact the resin 500 may be seated on the upper side of the protrusion 410. That is, the portion of the sheet-like member 200 that does not contact the resin 500 is supported upward by the protrusion 410, thereby preventing the battery cell group 100 from pressing the resin 500 accommodated in the receiving space S. Therefore, the portion of the sheet-like member 200 that does not contact the resin 500 may prevent the resin 500 from overflowing from the receiving space S.

Meanwhile, the length of the sheet-like member 200 in the width direction may be longer than the length of the protrusion 410 in the width direction. Here, the sheet-like member 200 may cover the entire upper surface of the protrusion 410, and a portion of the sheet-like member 200 that does not contact the upper surface of the protrusion 410 may contact the resin 500. In this case, the entire upper surface of the protrusion 410 supports the sheet-like member 200 upward, so that the battery cell group 100 to which the sheet-like member 200 is attached may be firmly supported toward the upper side of the receiving space S.

This sheet-like member 200 may have various shapes. In particular, the sheet-like member 200 may have a strip shape that is attached to both side surfaces and the lower surface of the battery cell group 100. Specifically, the sheet-like member 200 may include a first sheet-like member 210 in which at least a portion thereof contacts the upper surface of the first protrusion 411 and a second sheet-like member 220 in which at least a portion thereof contacts the upper surface of the second protrusion 412.

At this time, the distance between the first sheet-like member 210 and the second sheet-like member 220 may be shorter than the distance between the first protrusion 411 and the second protrusion 412. Therefore, a portion of the first sheet-like member 210 and the second sheet-like member 220 contact the resin 500 and may be fixed to the housing 400 together with the resin 500 when the resin 500 hardens.

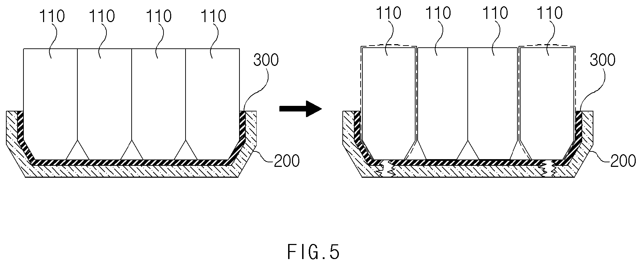

Meanwhile, FIG. 5 is a view showing a state in which a sheet-like member is torn when a battery cell expands in a battery module according to Embodiment 1 of the present disclosure. Specifically, FIG. 5 illustrates a state in which a sheet-like member attached to the battery cells is torn when each of the battery cells expands as the battery cells are charged and discharged.

When the battery cells 110 expand due to repeated charging and discharging, the battery cells 110 may exert tensile force on the attached sheet-like member 200. In this case, if the sheet-like member 200 is not torn or stretched, the sheet-like member 200 may apply pressure in a direction opposite to the direction where the battery cells 110 expand, and thus there is a concern of damaging the exterior material of the battery cells 110.

To prevent this, the sheet-like member 200 should be made of a material that is prone to tearing or stretching when the battery cells 110 expand. For example, the sheet-like member 200 may be a thin tape made of any one of silicon, PP, PET, PVC, and PE. At this time, an adhesive surface 300 may be formed between the sheet-like member 200 and the battery cell group 100. When the sheet-like member 200 is configured as described above, the sheet-like member 200 is more easily torn when the battery cells 110 expand, and thus, the sheet-like member 200 may be prevented from pressing the battery cells 110 when the battery cells 110 expand.

Additionally, the sheet-like member 200 may be made of a mesh material. In this case, the sheet-like member 200 may be more easily torn than when made of any one of silicon, PP, PET, PVC, and PE. In this case, it is possible to effectively prevent the sheet-like member 200 from pressing the battery cells 110 when the battery cells 110 expand.

### Embodiment 2

The battery module according to Embodiment 2 of the present disclosure differs from Embodiment 1 in that a plurality of holes are formed in the sheet-like member. Hereinbelow, the contents common to Embodiment 1 will be omitted as much as possible, and Embodiment 2 will be described focusing on the differences. That is, it is obvious that contents not described in Embodiment 2 may be regarded as contents of Embodiment 1 if necessary.

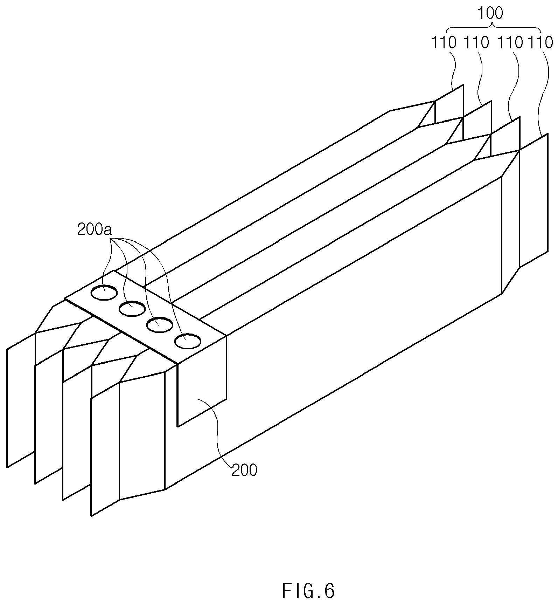

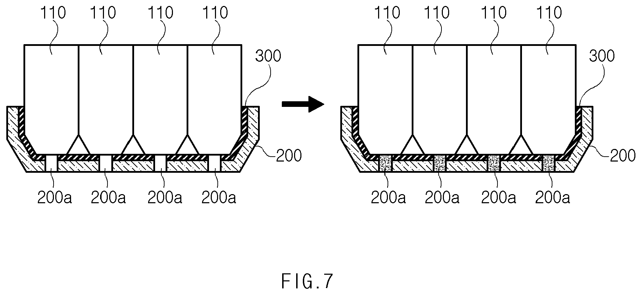

FIG. 6 is a view showing that holes are formed in a sheet-like member attached to a battery cell group in a battery module according to Embodiment 2 of the present disclosure. FIG. 7 is a view showing a state in which a resin flows into holes formed in a sheet in a battery module according to Embodiment 2 of the present disclosure.

Referring to FIGS. 6 and 7, a plurality of holes 200a may be formed in the sheet-like member 200 of the battery module 10 according to Embodiment 2 of the present disclosure. Specifically, the sheet-like member 200 of the battery module 10 may include the first sheet-like member 210 and the second sheet-like member 220 described in Embodiment 1, and a plurality of holes 200a may be formed in each of the first sheet-like member 210 and the second sheet-like member 220. In this case, the resin 500 accommodated in the receiving space S flows into the plurality of holes 200a, and the resin 500 flowing into the holes 200a contacts the battery cells 110, thereby enabling efficient heat dissipation from the battery cells 110.

Additionally, as the holes 200a are formed in the sheet-like member 200, the sheet-like member 200 may be more easily torn when tensile force is applied. In this case, since the sheet-like member 200 is torn when the battery cells 110 expand, the sheet-like member 200 may be prevented from pressing the battery cells 110 when the battery cells 110 expand.

The spacing between the plurality of holes 200a formed in the sheet-like member 200 may be formed in various ways. In particular, the plurality of holes 200a may be disposed at equal intervals in the sheet-like member 200. In this case, heat may be uniformly exchanged with the battery cells 110 included in the battery cell group 100.

Meanwhile, the same number of plurality of holes 200a as the number of plurality of battery cells 110 may be formed in the sheet-like member 200. Specifically, each portion of the sheet-like member 200 that contacts the plurality of battery cells 110 may have one hole 200a for each. In this case, the resin 500 flowing into each hole 200a contacts each battery cell 110, and thus heat exchange effect for each of the battery cells 110 may be improved.

Additionally, if each portion of the sheet-like member 200 that contacts the plurality of battery cells 110 may have one hole 200a for each, the upper surface of the hole 200a is blocked by one surface of the exterior material of the battery cell 110, and thus the resin 500 flowing into the hole 200a may be minimized from flowing into the empty space between the battery cells 110. In this case, the curing of the resin 500 in the empty space between the battery cells 110 may be minimized. Therefore, it is possible to prevent the cured resin 500 from locally pressing the exterior material of the battery cells 110 to damage the exterior material of the battery cells 110.

### Embodiment 3

Embodiment 3 of the present disclosure relates to a battery pack, and the battery pack according to Embodiment 3 of the present disclosure may include a plurality of battery modules 10. Specifically, the battery pack may include a battery module assembly in which a plurality of battery modules 10 are connected and a case that accommodates the battery module assembly. Additionally, the battery pack may further include a battery management system (BMS) electrically connected to the plurality of battery modules 10 to manage the temperature and charge/discharge status of the battery modules 10.

Such a battery pack may be applied to various means of transportation such as an electric bicycle, an electric vehicle, and a hybrid vehicle. Additionally, the application of the battery pack is not limited to the means of transportation, and the battery pack may be applied to various electronic devices capable of using battery modules.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

| | | | |
|---|---|---|---|
| 10: | Battery module | 100: | Battery cell group |
| 110: | Battery cell | 200: | Sheet-like member |
| 210: | First sheet-like member | 220: | Second sheet-like member |
| 300: | Adhesive surface | 400: | Housing |
| 410: | Protrusion | 411: | First protrusion |
| 412: | Second protrusion | 500: | Resin |
| S: | Receiving space | | |

## Claims

1. A battery module comprising:
a battery cell group composed of a plurality of battery cells;
a housing accommodating the battery cell group; and
a sheet-like member attached to the battery cell group,
wherein the housing is provided with a protrusion that forms a receiving space for accommodating a resin and supports the battery cell group, and
wherein the sheet-like member attached to the battery cell group contacts an upper surface of the protrusion.

2. The battery module according to claim 1,
wherein a portion of the sheet-like member contacts the upper surface of the protrusion, and the remaining portion of the sheet-like member contacts the resin within the receiving space.

3. The battery module according to claim 2,
wherein a portion of the sheet-like member is attached to an upper surface of the protrusion.

4. The battery module according to claim 1,
wherein a plurality of holes are formed in the sheet-like member.

5. The battery module according to claim 4,
wherein the same number of the holes as the number of battery cells are formed in the sheet-like member.

6. The battery module according to claim 4,
wherein each portion of the sheet-like member that contacts the plurality of battery cells has one hole for each.

7. The battery module according to claim 4,
wherein the plurality of holes are disposed at equal intervals in the sheet-like member.

8. The battery module according to claim 1,
wherein the sheet-like member is made of any one of silicon, PP, PET, PVC, and PE.

9. The battery module according to claim 1,
wherein the sheet-like member is made of a mesh material.

10. The battery module according to claim 1,
wherein the sheet-like member has a strip shape that is attached to both side surfaces and a lower surface of the battery cell group.

11. The battery module according to claim 1,
wherein the plurality of battery cells are arranged in a row along the width direction of the housing, and
wherein the sheet-like member is attached to the battery cell group in a direction parallel to the direction in which the plurality of battery cells are arranged.

12. The battery module according to claim 1,
wherein the protrusions comprise:
a first protrusion provided on one surface of the housing in the length direction; and
a second protrusion provided on the other surface of the housing in the length direction.

13. The battery module according to claim 12,
wherein the first protrusion and the second protrusion each have a bar shape extending along the width direction of the housing.

14. The battery module according to claim 12,
wherein the sheet-like member comprises:
a first sheet-like member in which at least a portion thereof contacts an upper surface of the first protrusion; and
a second sheet-like member in which at least a portion thereof contacts an upper surface of the second protrusion.

15. The battery module according to claim 14,
wherein a distance between the first sheet-like member and the second sheet-like member is shorter than a distance between the first protrusion and the second protrusion.

16. The battery module according to claim 1,
wherein each of the plurality of battery cells is a pouch cell.

17. The battery module according to claim 1,
wherein the length of the sheet-like member in a width direction is longer than the length of the protrusion in a width direction.

18. A battery pack comprising:
a battery module assembly in which a plurality of the battery modules according to claim 1 are connected; and
a case that accommodates the battery module assembly.
